# FASCICULE DE BREVET EUROPEEN

(11) **EP 2 941 553 B1**
(45) Date de publication et mention de la délivrance du brevet: **04.01.2017**
(21) Numéro de dépôt: 13788763.4
(22) Date de dépôt: 08.11.2013
(51) Int. Cl.: F01N 13/18, F16L 27/053, F16L 27/10, F16L 27/073

(54) **LIGNE D'ECHAPPEMENT DE VEHICULE AUTOMOBILE COMPORTANT UNE ROTULE PERFECTIONNEE**
ABGASANLAGE EINES KRAFTFAHRZEUGS MIT VERBESSERTER DREHBARER VERBINDUNG
EXHAUST LINE FOR A MOTOR VEHICLE WITH AN IMPROVED PIVOTABLE COUPLING

(30) Priorité: 26.12.2012 FR 1262791
(43) Date de publication de la demande: 11.11.2015
(73) Titulaire: Renault S.A.S., 92100 Boulogne-Billancourt (FR)
(72) Inventeur: DEVAUX, Bertrand, F-78960 Voisins le Bretonneux (FR); VIEIRA, Tony, F-78390 Bois d'Arcy (FR); MOSELEY, Sophie, F-78000 Versailles (FR)
(86) Numéro de dépôt international: PCT/EP2013/073334
(87) Numéro de publication internationale: WO 2014/102029

(56) Documents cités:
- EP-A2- 1 270 890
- WO-A1-90/15229
- FR-A1- 2 494 393
- FR-A3- 2 933 912
- JP-A- 2002 371 841

## Description

L'invention concerne une ligne d'échappement de véhicule automobile.

L'invention concerne plus particulièrement une ligne d'échappement de véhicule automobile comportant au moins un tube amont d'un premier diamètre principal, articulé avec un tube aval, d'un second diamètre inférieur au premier diamètre principal, par l'intermédiaire d'une rotule qui est apte à autoriser un débattement angulaire maximal d'un nombre déterminé de degrés entre les deux tubes, ladite rotule comportant un élément tronconique mâle, solidaire du tube amont, qui est reçu contre un élément tronconique femelle fixé à l'extrémité du tube aval, un tronçon d'extrémité du tube amont, de longueur déterminée, faisant saillie hors de l'élément tronconique mâle au moins en partie à l'intérieur de l'élément tronconique femelle et portant une bague d'étanchéité qui est interposée entre ledit tronçon d'extrémité du tube amont et la paroi intérieure de l'élément tronconique femelle.

On connaît de nombreux exemples de lignes d'échappement de ce type, par exemple du document EP 1 270 890 A2.

Un inconvénient connu d'une telle ligne d'échappement est localisé plus précisément au niveau de la rotule.

En effet, dans la configuration précédemment décrite, les gaz d'échappement brûlants circulent d'une part directement au contact du tronçon d'extrémité du tube amont qui porte la bague d'étanchéité, et d'autre part s'engouffrent dans la cavité délimitée entre la bague et l'élément tronconique femelle en venant lécher une extrémité avant de la bague d'étanchéité.

Les bagues d'étanchéité conventionnelles sont généralement réalisées à partir d'un tressage de fil d'inox, chargé de matériau graphite.

Or on a constaté que les bagues d'étanchéité soumises à de telles températures tendaient à se décomposer, le liant graphite étant progressivement décollé du tressage métallique et étant emporté par les gaz d'échappement, de sorte qu'une telle bague n'a qu'une durée de vie limitée dans une telle configuration.

L'invention propose une ligne d'échappement du type décrit précédemment comportant une rotule d'une nouvelle conception dans laquelle la bague d'étanchéité est sensiblement isolée des gaz d'échappement et de la chaleur qu'ils dissipent, afin d'accroître la durée de vie de ladite bague.

Dans ce but, l'invention propose une ligne d'échappement du type décrit précédemment, caractérisé en ce que le tube amont reçoit un élément intermédiaire tronconique convergent formant déflecteur aérodynamique qui est agencé avec jeu radial dans le tronçon d'extrémité du tube amont et qui débouche sensiblement en regard de l'extrémité du tube aval pour canaliser les gaz d'échappement et les calories correspondantes hors de la zone de contact de la bague avec le tronçon d'extrémité du tube amont et l'élément tronconique femelle, afin d'éviter la dégradation de ladite bague d'étanchéité.

Selon d'autres caractéristiques de l'invention :
- l'élément intermédiaire tronconique convergent comporte:
   - un premier tronçon cylindrique, d'un diamètre correspondant sensiblement au premier diamètre principal, qui est reçu sans jeu dans une partie du tube amont agencée en amont de son tronçon d'extrémité,
   - un deuxième tronçon tronconique,
   - un troisième tronçon cylindrique, d'un diamètre correspondant au second diamètre, dont l'extrémité débouche sensiblement en regard de l'extrémité du tube aval,
- les premier, deuxième et troisième tronçons de l'élément intermédiaire tronconique convergent sont coaxiaux,
- une direction axiale commune d'une sortie du deuxième tronçon tronconique et du troisième tronçon cylindrique forme avec une direction axiale commune d'une entrée du deuxième tronçon tronconique et du premier tronçon un angle qui correspond sensiblement au débattement angulaire maximal des tubes amont et aval, pour garantir la coaxialité du troisième tronçon de l'élément intermédiaire tronconique convergent avec le tube aval lorsque les tubes amont et aval occupent une position angulaire relative correspondant à l'angle de débattement,
- le tronçon d'extrémité du tube amont est d'un diamètre supérieur au premier diamètre principal du tube amont,
- la bague d'étanchéité est réalisée en treillis métallique en fil d'inox chargé avec un liant à base de graphite.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'une rotule selon l'état de la technique ;
- la figure 2 est une vue en coupe de la rotule de la figure 1 dans une position selon laquelle les tubes amont et aval sont alignés ;
- la figure 3 est une vue en coupe de la rotule dans une position selon laquelle les tubes amont et aval forment un angle correspondant au débattement maximal ;
- la figure 4 est une vue en coupe illustrant le cheminement des gaz dans une rotule selon l'état de la technique ;
- la figure 5 est une vue de détail en coupe illustrant le cheminement des gaz dans une rotule selon l'état de la technique ;
- la figure 6 est une vue en coupe illustrant le cheminement des gaz dans une rotule selon un premier mode de réalisation de l'invention ;
- la figure 7 est une vue de détail en coupe illustrant le cheminement des gaz dans la rotule de la figure 6 ;
- la figure 8 est une vue en coupe illustrant le cheminement des gaz dans une rotule selon un second mode de réalisation de l'invention.

Dans la description qui va suivre, des chiffres de référence identiques désignent des pièces identiques ou ayant des fonctions similaires.

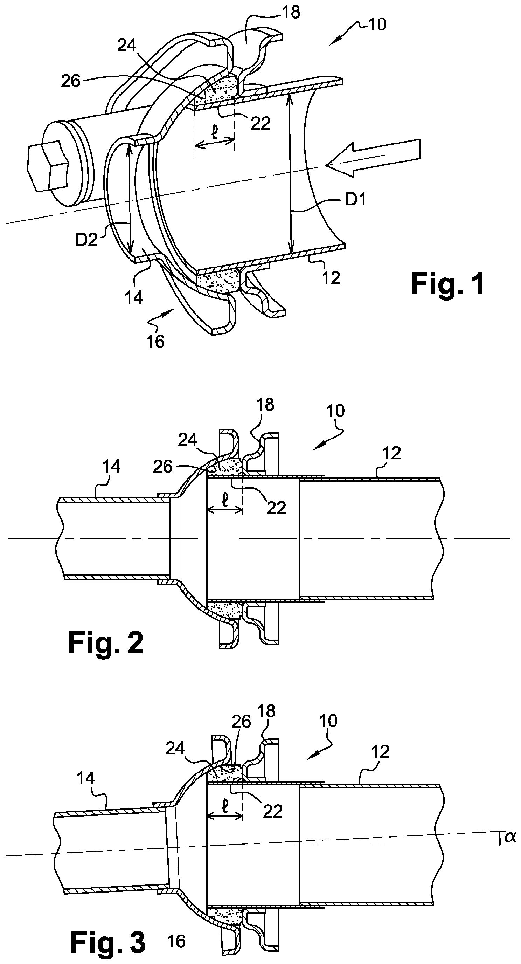

On a représenté sur les figures 1 à 5 une partie d'une ligne 10 d'échappement de véhicule automobile.

De manière connue, la ligne 10 comporte au moins un tube amont 12 d'un premier diamètre "D₁" principal, qui est articulé avec un tube aval 14, d'un second diamètre "D₂" inférieur au premier diamètre "D1" principal.

L'articulation des tubes 12, 14 est réalisée par l'intermédiaire d'une rotule 16 qui autorise un débattement angulaire maximal "α" d'un nombre déterminé de degrés entre les deux tubes 12 et 14, notamment lorsqu'un moteur (non représenté), solidaire du tube amont 12, se cabre sous l'effet d'une brusque reprise de couple. Une telle configuration a été représentée en particulier aux figures 2 et 3, la figure 2 représentant une rotule dont l'angle entre les tubes amont 12 et aval 14 est nul et la figure 3 représentant une rotule dont l'angle entre les tubes amont 12 et aval 14 est maximal.

La rotule 16 comporte de manière connue un élément tronconique mâle 18, solidaire du tube amont 12, qui est reçu au contre un élément tronconique femelle 20 fixé à l'extrémité du tube aval 14. Un tronçon d'extrémité 22 du tube amont 12, de longueur "I' déterminée, fait saillie hors de l'élément tronconique mâle 18 au moins en partie à l'intérieur de l'élément tronconique femelle 20. Ce tronçon 22 porte une bague d'étanchéité 24 qui est interposée entre ledit tronçon d'extrémité 22 du tube amont 12 et une paroi intérieure 26 de l'élément tronconique femelle 20.

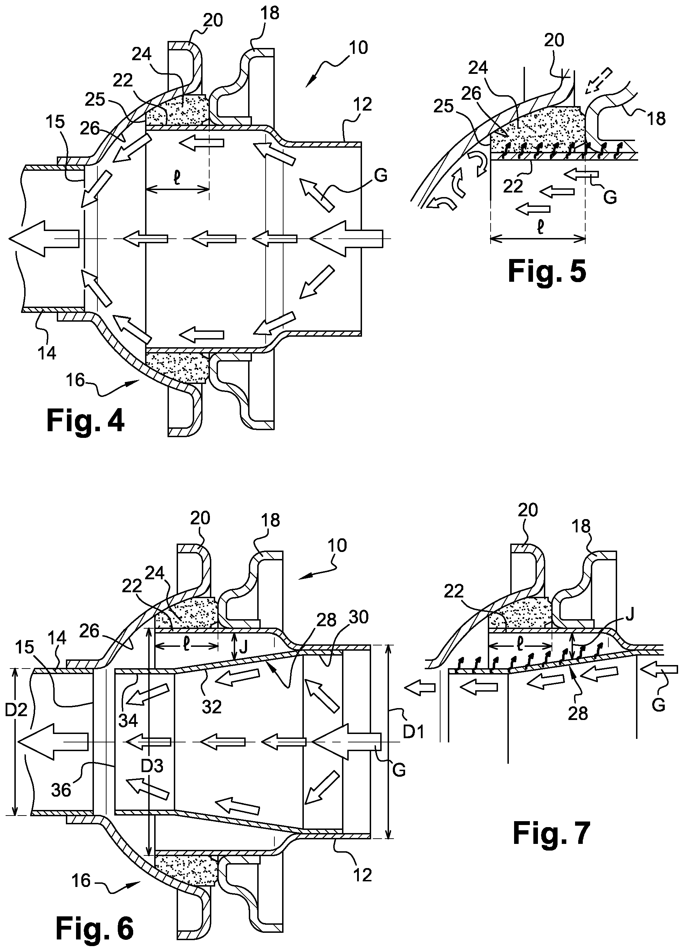

Comme l'illustrent les figures 4 et 5, lorsque des gaz d'échappement "G" circulent dans la rotule 16, ceux-ci tendent à provoquer l'échauffement de la bague d'étanchéité 24. En effet, ces gaz, représentés par des flèches sur les figures 4 et 5; lèchent le tronçon 22 d'extrémité et provoquent ainsi l'échauffement de la bague 24 par conduction au travers le tronçon d'extrémité 22 du tube amont 12.

Les gaz attaquent aussi directement une extrémité avant 25 de la bague 24.

Ainsi, les gaz 24 attaquent le liant graphite qui lie le tressage de fils d'inox de la bague 24. Une fois que ce liant est percé, les gaz brûlants sont aptes à pénétrer dans la bague 24 et provoquent son usure accélérée.

L'invention remédie à cet inconvénient en proposant une ligne d'échappement 10 comportant une rotule 16 dans laquelle la bague 24 est sensiblement isolée.

Dans ce but, comme l'illustrent les figures 6 à 8, l'invention propose une ligne d'échappement du type décrit précédemment, caractérisée en ce que le tube amont 12 reçoit un élément intermédiaire tronconique 28 convergent formant déflecteur aérodynamique qui est agencé avec un jeu radial "J" dans le tronçon d'extrémité du 22 tube amont 12 et qui débouche sensiblement en regard d'une extrémité 15 du tube aval 14 pour canaliser les gaz G d'échappement et les calories correspondantes hors de la zone de contact de la bague 14 avec le tronçon 22 d'extrémité du tube amont 12 et avec l'élément tronconique femelle 20, représentée en détail à la figure 5, afin d'éviter la dégradation de ladite 14 bague d'étanchéité.

L'élément intermédiaire 28 étant sensiblement tronconique, le jeu "J" entre cet élément intermédiaire 28 et le tronçon 22 d'extrémité n'est pas constant, mais est croissant entre les deux extrémités de l'élément 28, ce jeu étant maximal à l'extrémité libre dudit élément 28, tandis que l'extrémité opposée de l'élément 28 est reçu serré dans le tube amont 12.

Le tube 12 pourrait être de diamètre constant. Toutefois, dans le mode de réalisation préféré de l'invention, comme l'illustre la figure 6, le tronçon d'extrémité 22 du tube amont 12 est d'un diamètre "D₃" supérieur au premier diamètre principal "D1" du tube amont 12. De ce fait, le jeu entre cet élément intermédiaire 28 et le tronçon 22 d'extrémité est au moins égal à la différence des rayons entre le plus grand rayon de l'élément intermédiaire 28 et le rayon du tronçon d'extrémité 22, ce qui garantit l'existence d'une épaisseur minimale d'air qui isole l'élément 28, soumis au gaz brûlants, du tronçon d'extrémité 22.

Dans le mode de réalisation préféré de l'invention, la bague 24 d'étanchéité est réalisée en treillis métallique en fil d'inox chargé avec un liant à base de graphite. Cette configuration n'est pas limitative de l'invention, mais présente le meilleur compromis en termes de résistance et d'étanchéité.

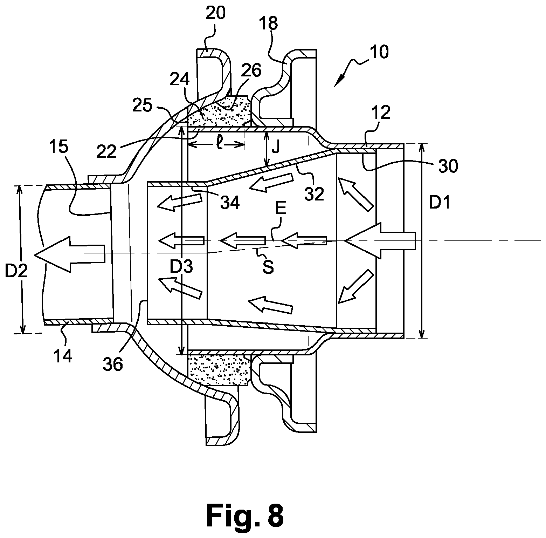

Dans le mode de réalisation préféré de l'invention, comme l'illustrent les figures 6 et 8, l'élément intermédiaire tronconique convergent 28 comporte un premier tronçon cylindrique 30, d'un diamètre correspondant sensiblement au premier diamètre "D₁" principal, qui est reçu sans jeu dans une partie du tube amont 12 agencée en amont de son tronçon d'extrémité 22. Le premier tronçon 30 est par exemple emmanché à force dans le tube amont 12 auquel il peut être soudé par soudure laser ou au point.

L'élément intermédiaire tronconique convergent 28 comporte un deuxième tronçon tronconique 32 dont le diamètre varie sensiblement entre les diamètres "'D₁" et "D₂".

Enfin, l'élément intermédiaire tronconique convergent 28 comporte un troisième tronçon cylindrique 34, d'un diamètre correspondant au second diamètre "D₂", dont l'extrémité 36 débouche sensiblement en regard de l'extrémité 15 du tube aval 14.

Le tronçon cylindrique 34 peut être constitué par une pièce rapportée supplémentaire, ou bien par un prolongement d'un tube amont tel que par exemple appartenant au collecteur d'échappement.

Bien entendu, il sera compris que la distance entre l'extrémité du troisième tronçon 34 et l'élément tronconique femelle 20 est en tout état de cause prévue pour que le troisième tronçon 34 n'interfère pas l'élément tronconique femelle 20 et pour permettre le débattement d'angle "α" entre les tubes 12 et 14.

Selon un premier mode de réalisation qui a été représenté aux figures 6 et 7, les premier, deuxième et troisième tronçons 30, 32, 34 de l'élément intermédiaire tronconique 28 convergent sont coaxiaux. Cette configuration correspond principalement à un usage de la ligne d'échappement selon lequel l'angle formé entre les tubes amont 12 et aval 14 est la plupart du temps nul.

Selon un second mode de réalisation qui a été représenté à la figure 8, une direction axiale "S" commune d'une sortie du deuxième tronçon tronconique 32 et du troisième tronçon cylindrique 34 forme avec une direction axiale "E" commune d'une entrée du deuxième tronçon tronconique 32 et du premier tronçon un angle non nul qui correspond au plus au débattement angulaire maximal "α" des tubes amont 12 et aval 14. Cette configuration garantit la coaxialité du troisième tronçon 34 de l'élément intermédiaire tronconique convergent avec le tube aval 12 lorsque les tubes amont 12 et aval 14 occupent une position angulaire non nulle au plus égale à l'angle "α" de débattement maximal, comme représenté à la figure 8. Il sera donc compris que cette configuration sera donc à réserver à une ligne d'échappement qui occupe la plupart du temps lors de son utilisation une configuration dans laquelle les tubes amont 12 et aval 14 forment un angle non nul, et dans ce cas on privilégiera un angle entre les tronçons 32, 34 le plus proche de l'angle que forment en fonctionnement la plupart du temps les tubes amont 12 et aval 14, cet angle étant évidemment au plus égal à l'angle "α" de débattement maximal.

L'invention propose donc dans chacun de ces modes de réalisation une ligne d'échappement 10 dont la rotule 16 présente une étanchéité durable du fait de la grande résistance de sa bague d'étanchéité 24.

## Revendications

1. Ligne d'échappement (10) pour un véhicule automobile comportant au moins un tube amont (12) d'un premier diamètre principal (D₁), articulé avec un tube aval (14), d'un second diamètre (D₂) inférieur au premier diamètre principal (D₁), par l'intermédiaire d'une rotule (16) qui est apte à autoriser un débattement angulaire (α) maximal d'un nombre déterminé de degrés entre les deux tubes (12, 14), ladite rotule (16) comportant un élément tronconique mâle (18), solidaire du tube amont (12), qui est reçu contre un élément tronconique femelle (20) fixé à l'extrémité du tube aval (14), un tronçon d'extrémité (12) du tube amont, de longueur (I) déterminée, faisant saillie hors de l'élément tronconique mâle (18) au moins en partie à l'intérieur de l'élément tronconique femelle (20) et portant une bague d'étanchéité (24) qui est interposée entre ledit tronçon d'extrémité (22) du tube amont (12) et une paroi intérieure (26) de l'élément tronconique femelle (20),
**caractérisée en ce que** le tube amont (12) reçoit un élément intermédiaire tronconique convergent (28) formant déflecteur aérodynamique qui est agencé avec jeu radial (J) dans le tronçon d'extrémité (22) du tube amont (12) et qui débouche sensiblement en regard de l'extrémité (15) du tube aval (14) pour canaliser les gaz (G) d'échappement et les calories correspondantes hors de la zone de contact de la bague (24) avec le tronçon d'extrémité (22) du tube amont (12) et l'élément tronconique femelle (20), afin d'éviter la dégradation de ladite bague (24) d'étanchéité.

2. Ligne d'échappement (10) selon la revendication précédente, **caractérisée en ce que** l'élément (28) intermédiaire tronconique convergent comporte :
- un premier tronçon cylindrique (30), d'un diamètre correspondant sensiblement au premier diamètre principal (D₁), qui est reçu sans jeu dans une partie du tube amont (12) agencée en amont de son tronçon d'extrémité (22),
- un deuxième tronçon tronconique (32),
- un troisième tronçon cylindrique (34), d'un diamètre correspondant au second diamètre (D₂), dont l'extrémité débouche sensiblement en regard de l'extrémité (15) du tube aval (14).

3. Ligne d'échappement (10) selon la revendication précédente, **caractérisée en ce que** les premier, deuxième et troisième tronçons (30, 32, 34) de l'élément intermédiaire (28) tronconique convergent sont coaxiaux.

4. Ligne d'échappement (10) selon la revendication 2, **caractérisé en ce qu'**une direction axiale commune (S) d'une sortie du deuxième tronçon tronconique (32) et du troisième tronçon cylindrique (34) forme avec une direction axiale commune (E) d'une entrée du deuxième tronçon tronconique (32) et du premier tronçon (30) un angle non nul au plus égal au débattement angulaire (α) maximal des tubes amont (12) et aval (14), pour garantir la coaxialité du troisième tronçon (34) de l'élément intermédiaire tronconique (28) convergent avec le tube aval (14) lorsque les tubes amont (12) et aval (14) occupent une position angulaire relative non nulle au plus égale à l'angle (α) de débattement maximal.

5. Ligne d'échappement (10) selon l'une quelconque des revendications précédentes, **caractérisé en ce que** le tronçon d'extrémité (22) du tube amont (12) est d'un diamètre (D₃) supérieur au premier diamètre principal (D₁) du tube amont.

6. Ligne d'échappement (10) selon l'une quelconque des revendications précédentes, **caractérisé en ce que** la bague d'étanchéité (24) est réalisée en treillis métallique en fil d'inox chargé avec un liant à base de graphite.

## Patentansprüche

1. Auspuffanlage (10) für ein Kraftfahrzeug, aufweisend mindestens ein stromaufwärts liegendes Rohr (12) mit einem ersten Hauptdurchmesser (D₁), welches mit einem stromabwärts liegenden Rohr (14) mit einem zweiten Durchmesser (D₂), welcher kleiner als der erste Hauptdurchmesser (D₁) ist, mit Hilfe eines Kugelgelenks (16), welches geeignet ist, eine maximale Winkelauslenkung (α) einer vorgegebenen Anzahl von Graden zwischen den beiden Rohren (12, 14) zuzulassen, gelenkig verbunden ist, wobei das Kugelgelenk (16) ein eindringendes kegelstumpfförmiges Element (18) aufweist, welches fest mit dem stromaufwärts liegenden Rohr (12) verbunden ist, welches gegen ein an dem Ende des stromabwärts liegenden Rohres (14) befestigtes umgreifendes kegelstumpfförmiges Element (20) aufgenommen wird, wobei ein Endabschnitt (12) des stromaufwärts liegenden Rohres von vorgegebener Länge (l) aus dem eindringenden kegelstumpfförmigen Element (18) zumindest zum Teil in das Innere des umgreifenden kegelstumpfförmigen Elements (20) hervorragt und einen Dichtungsring (24) trägt, welcher zwischen den Endabschnitt (22) des stromaufwärts liegenden Rohres (12) und eine Innenwand (26) des umgreifenden kegelstumpfförmigen Elements (20) eingefügt ist, **dadurch gekennzeichnet, dass** das stromaufwärts liegende Rohr (12) ein einen aerodynamischen Abweiser bildendes kegelstumpfförmiges, konvergierendes Zwischenelement (28) aufnimmt, welches mit radialem Spiel (J) in dem Endabschnitt (22) des stromaufwärts liegenden Rohres (12) eingerichtet ist, und welches im Wesentlichen gegenüber dem Ende (15) des stromabwärts liegenden Rohres (14) mündet, um die Auspuffgase (G) und die entsprechende Wärme aus dem Kontaktbereich des Rings (24) mit dem Endabschnitt (22) des stromaufwärts liegenden Rohres (12) und dem umgreifenden kegelstumpfförmigen Element (20) zu leiten, um eine Schädigung des Dichtungsrings (24) zu vermeiden.

2. Auspuffanlage (10) nach dem vorhergehenden Anspruch, **dadurch gekennzeichnet, dass** das kegelstumpfförmige, konvergierende Zwischenelement (28) folgendes aufweist:
- einen ersten zylindrischen Abschnitt (30) mit einem Durchmesser, welcher im Wesentlichen dem ersten Hauptdurchmesser (D₁) entspricht, welcher ohne Spiel in einem Teil des stromaufwärts liegenden Rohres (12) aufgenommen ist, welcher stromaufwärts von seinem Endabschnitt (22) liegt,
- einen zweiten kegelstumpfförmigen Abschnitt (32),
- einen dritten zylindrischen Abschnitt (34) mit einem Durchmesser, welcher dem zweiten Durchmesser (D₂) entspricht, dessen Ende im Wesentlichen gegenüber dem Ende (15) des stromabwärts liegenden Rohres (14) mündet.

3. Auspuffanlage (10) nach dem vorhergehenden Anspruch, **dadurch gekennzeichnet, dass** der erste, zweite und dritte Abschnitt (30, 32, 34) des konvergierenden, kegelstumpfförmigen Zwischenelements (28) koaxial sind.

4. Auspuffanlage (10) nach Anspruch 2, **dadurch gekennzeichnet, dass** eine gemeinsame axiale Richtung (S) eines Austritts des zweiten kegelstumpfförmigen Abschnitts (32) und des dritten zylindrischen Abschnitts (34) mit einer gemeinsamen axialen Richtung (E) eines Eintritts des zweiten kegelstumpfförmigen Abschnitts (32) und des ersten Abschnitts (30) einen Winkel von ungleich Null und höchstens gleich der maximalen Winkelauslenkung (α) des stromaufwärts (12) und stromabwärts (14) liegenden Rohres einschließt, um die Koaxialität des dritten Abschnitts (34) des konvergierenden kegelstumpfförmigen Zwischenelements (28) mit dem stromabwärts liegenden Rohr (14) zu gewährleisten, wenn das stromaufwärts (12) und stromabwärts (14) liegende Rohr eine relative Winkelposition von ungleich Null und höchstens gleich der maximalen Winkelauslenkung (α) einnehmen.

5. Auspuffanlage (10) nach einem der vorhergehenden Ansprüche, **dadurch gekennzeichnet, dass** der Endabschnitt (22) des stromaufwärts liegenden Rohrs (12) einen Durchmesser (D₃) aufweist, welcher größer als der erste Hauptdurchmesser (D₁) ist.

6. Auspuffanlage (10) nach einem der vorhergehenden Ansprüche, **dadurch gekennzeichnet, dass** der Dichtungsring (24) aus Metallgeflecht aus nicht rostendem Draht ausgeführt ist, welcher mit einem Bindemittel auf der Basis von Graphit versetzt ist.

## Claims

1. Exhaust line (10) for a motor vehicle, comprising at least an upstream tube (12) of a first main diameter (D₁), articulated with a downstream tube (14) of a second diameter (D₂) smaller than the first main diameter (D₁), by means of a ball-and-socket joint (16) which is able to allow a maximum angular deflection (α) of a determined number of degrees between the two tubes (12, 14), said ball-and-socket joint (16) comprising a male frustoconical element (18) solid with the upstream tube (12), which is received against a female frustoconical element (20) fixed to the end of the downstream tube (14), an end portion (12) of the upstream tube, of determined length (1), projecting out the male frustoconical element (18) at least partially into the female frustoconical element (20) and bearing a sealing ring (24) which is interposed between said end portion (22) of the upstream tube (12) and an interior wall (26) of the female frustoconical element (20),
**characterized in that** the upstream tube (12) receives a convergent frustoconical intermediate element (28) forming an aerodynamic deflector which is arranged with radial clearance (J) in the end portion (22) of the upstream tube (12) and opens substantially facing the end (15) of the downstream tube (14) so as to channel the exhaust gases (G) and corresponding heat energy away from the zone of contact of the ring (24) with the end portion (22) of the upstream tube (12) and the female frustoconical element (20), so as to avoid degradation of said sealing ring (24).

2. Exhaust line (10) according to the preceding claim, **characterized in that** the convergent frustoconical intermediate element (28) comprises:
- a cylindrical first portion (30) of a diameter corresponding substantially to the first main diameter (D₁), which is received without clearance in a part of the upstream tube (12) which part is arranged upstream of the end portion (22) thereof,
- a frustoconical second portion (32),
- a cylindrical third portion (34) of a diameter corresponding to the second diameter (D₂), the end of which opens substantially facing the end (15) of the downstream tube (14).

3. Exhaust line (10) according to the preceding claim, **characterized in that** the first, second and third portions (30, 32, 34) of the convergent frustoconical intermediate element (28) are coaxial.

4. Exhaust line (10) according to Claim 2, **characterized in that** a common axial direction (S) of an outlet of the frustoconical second portion (32) and of the cylindrical third portion (34) forms with a common axial direction (E) of an inlet of the frustoconical second portion (32) and of the first portion (30) a non-zero angle at most equal to the maximum angular deflection (α) of the upstream (12) and downstream (14) tubes, so as to guarantee that the third portion (34) of the convergent frustoconical intermediate element (28) remains coaxial with the downstream tube (14) when the upstream (12) and downstream (14) tubes are occupying a non-zero relative angular position at most equal to the maximum deflection angle (α).

5. Exhaust line (10) according to any one of the preceding claims, **characterized in that** the end portion (22) of the upstream tube (12) is of a diameter (D₃) greater than the first main diameter (D₁) of the upstream tube.

6. Exhaust line (10) according to any one of the preceding claims, **characterized in that** the sealing ring (24) is made of a stainless steel wire mesh packed with a graphite-based binder.
